# FASCICULE DE BREVET EUROPEEN

(11) **EP 3 983 665 B1**
(45) Date de publication et mention de la délivrance du brevet: **01.11.2023**
(21) Numéro de dépôt: 20733255.2
(22) Date de dépôt: 12.06.2020
(51) Int. Cl.: F03B 13/00

(54) **INSTALLATION DE PRODUCTION PÉTROLIÈRE OU GAZIÈRE, PROCÉDÉ CORRESPONDANT ET PROCÉDÉ DE RÉNOVATION POUR OBTENIR UNE TELLE INSTALLATION**
ÖL- ODER GASERZEUGUNGSANLAGE, ENTSPRECHENDES VERFAHREN UND RENOVIERUNGSVERFAHREN ZUR HERSTELLUNG EINER SOLCHEN ANLAGE
OIL OR GAS PRODUCTION FACILITY, CORRESPONDING METHOD AND RENOVATION METHOD FOR OBTAINING SUCH A FACILITY

(30) Priorité: 12.06.2019 FR 1906247
(43) Date de publication de la demande: 20.04.2022
(73) Titulaire: Technip Energies France, 92741 Nanterre Cedex (FR)
(72) Inventeur: TECHERNIGUIN, Nicolas, 75017 PARIS (FR); DELLINGER, Guilhem, 57412 SCHMITTVILLER (FR); HEME DE-LACOTTE, Luc, 92800 PUTEAUX (FR); CAHAY, Marc, 93250 VILLEMOMBLE (FR)
(74) Mandataire: McWilliams, David John
(86) Numéro de dépôt international: PCT/EP2020/066379
(87) Numéro de publication internationale: WO 2020/249780

(56) Documents cités:
- EP-A1- 3 196 115
- WO-A1-02/21060
- DE-A1-102007 036 343
- GB-A- 2 439 832
- US-A1- 2004 126 223

## Description

La présente invention concerne une installation de production pétrolière ou gazière, par exemple de production de gaz naturel liquéfié (GNL).

L'invention concerne également un procédé de production correspondant, ainsi qu'un procédé de rénovation d'une telle installation.

Une telle installation comporte une ou plusieurs unités de traitement refroidies par de l'eau de refroidissement puisée dans une étendue d'eau. L'installation est une installation fixe située sur ou à proximité de l'étendue d'eau, ou une installation flottant sur l'étendue d'eau, telle qu'une plate-forme ou une barge.

Par exemple, les plates-formes portant une unité de liquéfaction de gaz naturel sont désignées par les termes anglais de *Floating Liquefied Natural Gas* ou « FLNG », *Floating Production Storage and Offloading* ou « FPSO », ou encore *Single Point Anchor Réservoir* ou « SPAR ». Ces installations sont destinées notamment à produire du gaz naturel, à liquéfier le gaz naturel produit, puis à stocker et/ou à transférer le gaz naturel liquéfié sur un méthanier ou une autre barge de transport. Ceci simplifie le transport du gaz vers les lieux de consommation, en réduisant le volume transporté. En outre, la localisation des installations en mer éloigne les risques liés à ces installations des zones habitées et diminue l'impact sur l'environnement.

Afin de mettre en oeuvre de manière économique un procédé pétrolier ou gazier, les unités de traitement rejettent une grande quantité de chaleur dans le milieu environnant, en pratique dans l'air ou dans l'eau.

L'avantage d'une installation située en surface ou à proximité d'une étendue d'eau est qu'elle dispose par nature d'une source d'eau de refroidissement en grande quantité et à basse température. Par conséquent, il est connu de faire circuler de l'eau prélevée dans l'étendue d'eau pour refroidir des équipements de l'unité de traitement, soit directement, soit par l'intermédiaire d'une boucle d'eau douce.

Les installations actuelles utilisent une ou plusieurs vannes de contrôle de pression (ou soupapes de surpression) dans le circuit d'eau de refroidissement pour maintenir sa stabilité.

Une telle technologie donne satisfaction du point de vue du refroidissement des équipements de l'unité de traitement. Toutefois, elle consomme de l'énergie pour assurer la circulation de l'eau de refroidissement. Cette consommation a un impact sur le rendement énergétique global de l'installation.

Le document WO 02/21060 décrit une installation correspondant au préambule de la revendication 1.

Un but de l'invention est donc d'améliorer le rendement énergétique global de l'installation sans toutefois réduire sa productivité.

A cet effet, l'invention a pour objet une installation selon la revendication 1.

Suivant des modes particuliers de réalisation, l'installation selon l'invention comprend l'une ou plusieurs des caractéristiques correspondant aux revendications 2 à 9 et des caractéristiques suivantes, prise(s) isolément ou suivant toutes les combinaisons techniquement possibles :
- l'installation est une installation de production de gaz naturel liquéfié à partir de gaz naturel,
- l'unité de traitement est une unité de liquéfaction de gaz naturel, et
- l'installation est située en surface de l'étendue d'eau.

L'invention a également pour objet un procédé de production selon la revendication 10.

L'invention a enfin pour objet un procédé de rénovation selon la revendication 11.

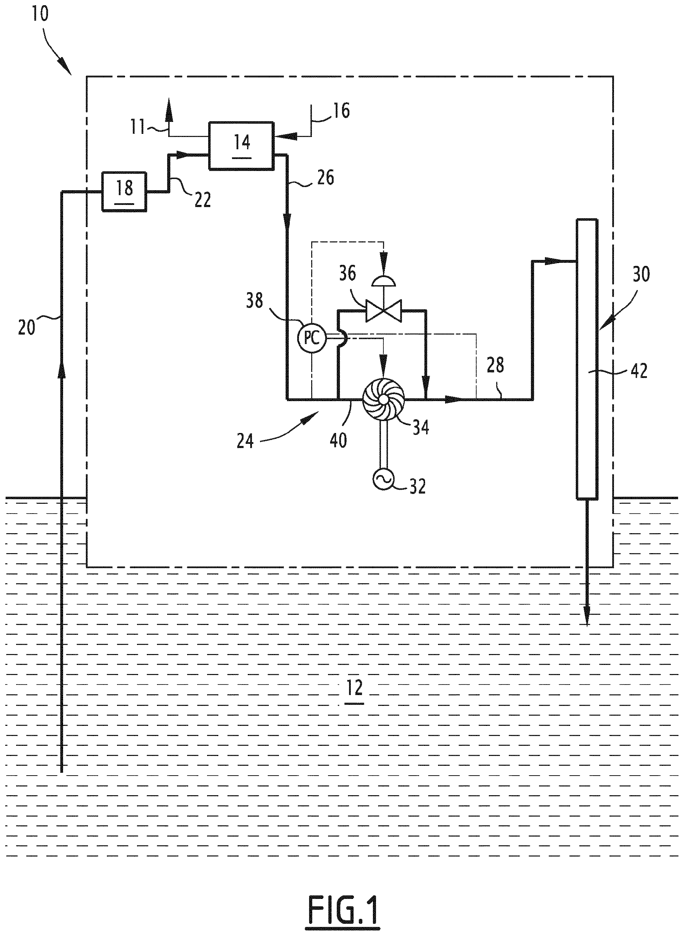

L'invention sera mieux comprise à la lecture de la description qui va suivre, donnée uniquement à titre d'exemple, et faite en se référant au dessin annexé, sur lequel la figure 1 est une vue schématique d'une installation selon l'invention.

Dans tout ce qui suit, les termes « amont » et « aval » s'entendent par rapport au sens normal de circulation d'un flux dans un conduit.

En référence à la figure 1, on décrit une installation 10 de production pétrolière ou gazière selon l'invention.

Dans l'exemple représenté, l'installation 10 est une installation de production de gaz naturel liquéfié 11.

Selon des variantes non représentées, l'installation 10 est un autre type d'installation pétrolière ou gazière.

L'installation 10 est par exemple disposée à la surface d'une étendue d'eau 12.

L'étendue d'eau 12 est par exemple une mer, un lac ou un océan. La profondeur de l'étendue d'eau 12 au droit de l'installation 10 est par exemple comprise entre 15 m et 3000 m.

Selon un mode de réalisation particulier (non représenté), l'installation 10 est une installation terrestre, située à proximité d'une étendue d'eau, telle qu'un lac ou un fleuve.

Par « à proximité », on entend ici à une distance compatible avec le fait de puiser de l'eau de refroidissement dans cette étendue d'eau et de l'acheminer jusqu'aux équipements à refroidir.

L'installation 10 est propre à collecter du gaz naturel provenant d'un réservoir souterrain (non représenté). Le gaz naturel est avantageusement produit directement sur l'installation 10.

En variante (non représentée), le gaz naturel est produit sur une autre unité de production à la surface d'étendue d'eau 12, ou sur une unité de production à terre et est convoyé jusqu'à l'installation 10 par une ligne de transport.

L'installation 10 est une installation fixe ou une installation flottante, par exemple de type FLNG, FPSO ou SPAR. Dans l'exemple représenté sur la figure 1, l'installation 10 est une unité flottante de liquéfaction de gaz naturel ou « FLNG ».

L'installation 10 comprend une unité de traitement 14, qui est dans l'exemple une unité de liquéfaction adaptée pour recevoir du gaz naturel 16 et produire le gaz naturel liquéfié 11.

L'installation 10 comprend une unité 18 adaptée pour prélever de l'eau 20 dans l'étendue d'eau 12 et pour délivrer un flux 22 d'eau de refroidissement à l'unité de traitement. L'installation 10 comprend également une unité 24 de régulation de pression adaptée pour recevoir un flux 26 d'eau de refroidissement à une première pression en provenance de l'unité de traitement 14 et pour fournir un flux 28 d'eau de refroidissement à une deuxième pression inférieure à la première pression. L'installation 10 comprend un système de rejet 30 adaptée pour recevoir le flux 28 et le rejeter dans ou vers l'étendue d'eau 12.

Par « unité de traitement », on entend ici une unité quelconque contribuant à la production pétrolière ou gazière, et comportant des équipements à refroidir par l'eau de refroidissement.

Optionnellement, l'installation 10 comprend aussi un alternateur 32.

Selon des variantes non représentées, l'installation 10 comprend plusieurs unités de prélèvement d'eau et/ou délivre plusieurs flux d'eau de refroidissement à l'unité de traitement 14.

Dans le cas où le gaz naturel 16 est produit sur place, l'installation 10 comprend des unités non représentées pour purifier le gaz naturel en extrayant l'eau, des composés lourds (par exemple les composés en C6+) et des composés soufrés en général présents dans le gaz brut extrait du réservoir souterrain.

L'unité de traitement 14 est adaptée pour refroidir le gaz naturel 16, voire pour le sous-refroidir afin d'obtenir le gaz naturel liquéfié 11. L'unité de traitement 14 est propre à mettre en relation d'échange thermique sans contact le gaz naturel 16 à refroidir avec le flux 22 d'eau de refroidissement et à produire le flux 26 qui est donc plus chaud que le flux 22.

L'unité 18 de prélèvement d'eau comporte une ou plusieurs pompes non représentées pour prélever l'eau et la faire circuler dans l'unité de traitement 14. L'unité 18 comporte par exemple des filtres (non représentés).

Le flux d'eau de refroidissement circulant dans l'unité de traitement 14 est par exemple compris entre 0,1 et 5 m³/s, voire entre 0,7 et 2,5 m³/s.

L'unité 24 de régulation de pression comprend une turbine 34 configurée pour recevoir au moins une partie du flux 26 d'eau de refroidissement, une soupape de surpression 36 montée en parallèle de la turbine, et un organe de contrôle 38.

Selon un mode particulier de réalisation (non représenté), l'unité 24 comprend plusieurs turbines, par exemple trois, montées en série, ou en parallèle, et remplaçant la turbine 34. Ces montages, notamment celui en parallèle, peuvent présenter un avantage en terme d'encombrement, ou s'avérer plus adaptés à la place disponible pour la ou les turbines.

La tuyauterie 40 possède avantageusement un diamètre hydraulique compris entre 0,1 et 2 m, voire entre 0,5 et 1 m.

La turbine 34 est configurée pour recevoir sélectivement tout ou partie du flux 26 et pour produire de l'énergie mécanique à partir de l'énergie contenue dans l'eau afin d'entraîner l'alternateur 32 et produire de l'énergie électrique.

Selon une variante non représentée, l'installation 10 est dépourvue d'alternateur et l'énergie mécanique de la turbine est utilisée directement, par exemple pour actionner un compresseur de l'unité de traitement 14 ou d'une autre unité, ou pour entraîner une ou plusieurs pompes de l'unité 18 de prélèvement d'eau, ou toute autre pompe.

La soupape de surpression 36 est adaptée pour recevoir sélectivement tout ou partie du flux 26.

L'organe de contrôle 38 est adapté pour mesurer la première pression (celle du flux 26), et avantageusement la deuxième pression (celle du flux 28), et pour rétroagir sur la turbine 34 et/ou sur la soupape de surpression 36 pour réguler la première pression à une valeur de consigne.

La turbine 34 et/ou la soupape de surpression 36 sont adaptées pour fournir le flux 28 d'eau de refroidissement.

L'installation 10 est avantageusement configurée pour que la première pression soit comprise entre 3 et 6 bars absolus. La première pression est par exemple d'environ 4 bars absolus.

La deuxième pression est avantageusement comprise entre 1 et 1,5 bar absolu(s), et est par exemple d'environ 1 bar absolu.

L'unité 24 de régulation de pression comprend une tuyauterie 40 connectée en amont à l'unité de traitement 14 et en aval à la turbine 34.

Le système de rejet 30 comprend par exemple une conduite de rejet 42 connectée en amont à l'unité 24 de régulation de pression pour recevoir le flux 28 d'eau de refroidissement.

Le fonctionnement de l'installation 10 se déduit de sa structure et va maintenant être brièvement décrit.

L'unité 18 de prélèvement d'eau prélève le flux d'eau 20 dans l'étendue d'eau 12 et fournit le flux 22 d'eau de refroidissement à l'unité de traitement 14.

L'unité de traitement 14 refroidit le gaz naturel 16 pour produire le gaz naturel liquéfié 11 et génère un flux de chaleur. Le flux 22 d'eau de refroidissement, par un échange de chaleur sans contact avec le gaz naturel 16, reçoit au moins une partie de ce flux de chaleur et se réchauffe avant de sortir de l'unité de traitement sous la forme du flux 26.

Dans un mode de fonctionnement préféré, l'intégralité du flux 26 d'eau de refroidissement en provenance de l'unité de traitement 14 entre dans la turbine 34, ce qui génère, d'une part, le flux 28 d'eau de refroidissement à la deuxième pression et, d'autre part, l'énergie mécanique entraînant l'alternateur 32.

Selon un autre mode de fonctionnement, par exemple en cas de maintenance de la turbine 34, le flux 26 est intégralement dirigé vers la soupape de surpression 36 et forme, après chute de pression, le flux 28.

Des modes de fonctionnement intermédiaire sont possibles, dans lesquels le flux 26 d'eau de refroidissement est divisé en une partie traversant la turbine 34 et une autre partie traversant la vanne de surpression 36, ces deux parties se rejoignant en aval de ces éléments pour former le flux 28.

Le flux 28 est finalement rejeté dans l'étendue d'eau 12 via la conduite de rejet 42.

Grâce aux caractéristiques décrites ci-dessus, notamment la turbine 34, l'énergie présente dans le flux 26 d'eau de refroidissement du fait de sa pression relativement élevée, est récupérée sous forme d'énergie mécanique utilisée soit directement, soit pour produire de l'énergie électrique. Ainsi, l'énergie nécessaire pour prélever l'eau de refroidissement et la porter à une pression adéquate est au moins en partie récupérée, ce qui améliore le rendement énergétique global de l'installation 10.

La puissance électrique fournie est égale au produit des quantités suivantes :
- la masse volumique de l'eau (1000 kg/m³),
- l'accélération de la pesanteur (g = 9,81 m/s²),
- le débit d'eau de refroidissement dans la turbine (par exemple 2 m³/s),
- la différence de pression statique entre la première pression et la deuxième pression (par exemple 25 m de colonne d'eau), et
- le rendement de l'ensemble turbine 34 et alternateur 32 (par exemple 60%).

On obtient dans cet exemple une puissance électrique d'environ 300 kW.

On décrit également un procédé de rénovation permettant d'obtenir l'installation 10 à partir d'une installation existante de production de gaz naturel liquéfié (non représentée).

L'installation existante se déduit de l'installation 10 représentée en remplaçant la turbine 34 par une vanne de surpression analogue à la vanne de surpression 36.

La rénovation consiste à remplacer cette vanne de surpression par la turbine 34.

Dans l'installation existante, le flux 26 d'eau de refroidissement passe dans l'une ou l'autre des vannes de surpression avant d'être rejeté.

Dans l'installation rénovée, c'est-à-dire l'installation 10, au moins à certains moments, tout ou partie du flux 26 passe dans la turbine 34, ce qui permet de générer de l'énergie et d'améliorer le rendement global de l'installation rénovée.

Comme on peut le déduire des caractéristiques ci-dessus et de la figure 1, chacune de la turbine 34 et la soupape de surpression 36 est adaptée en elle-même pour contrôler la première pression (en amont). L'installation 10 est avantageusement dépourvue d'organe régulateur de pression amont qui serait situé en amont de la turbine 34.

Selon un mode fonctionnement particulier précité, l'intégralité du flux 26 passe par la turbine 34, qui régule alors à elle seule la première pression. Dans ce cas, en l'absence de la turbine 34, la première pression serait sensiblement égale à la deuxième pression et il n'y aurait pas de régulation de la pression dans l'unité de traitement 14.

Dans le mode de réalisation dans lequel la turbine 34 est remplacée par plusieurs turbines montées en série, le flux 26 passe successivement dans chacune desdites turbines.

Dans le mode de réalisation dans lequel la turbine 34 est remplacée par plusieurs turbines montées en parallèle les unes des autres, le flux 26 se divise et passe dans chacune desdites turbines, puis se recombine pour former le flux 28.

Selon un autre mode fonctionnement précité, par exemple en cas de maintenance de la turbine 34, l'intégralité du flux 26 passe par la soupape de surpression 36, qui régule alors à elle seule la première pression.

Entre ces deux situations extrêmes, selon des modes fonctionnement intermédiaires précités, le flux 26 passe par la turbine 34 et par la soupape de surpression 36, qui régulent alors à elles deux la première pression.

Ainsi, comme on peut le constater, la turbine 34 n'est pas un organe passif du point de vue de la régulation de la pression amont régnant dans l'unité de traitement 14, mais un organe actif. La turbine 34 permet non seulement de récupérer de l'énergie contenue dans le flux 26, mais également de réguler la première pression, avantageusement sans intervention d'aucun autre organe actif.

## Revendications

1. Installation (10) de production pétrolière ou gazière comportant :
- au moins une unité de traitement (14),
- au moins une unité (18) de prélèvement d'eau adaptée pour prélever de l'eau (20) dans une étendue d'eau (12) et pour délivrer au moins un flux (22) d'eau de refroidissement à l'unité de traitement (14),
- une unité (24) de régulation de pression adaptée pour recevoir un flux (26) d'eau de refroidissement à une première pression en provenance de l'unité de traitement (14), et pour fournir au moins un flux (28) d'eau de refroidissement à une deuxième pression inférieure à la première pression,
- au moins un système de rejet (30) adapté pour recevoir au moins une partie du flux (28) d'eau de refroidissement à la deuxième pression, et
- au moins un organe de contrôle (38) adapté pour mesurer la première pression,
**caractérisée en ce que** :
- l'unité (24) de régulation de pression comprend au moins une turbine (34) configurée pour recevoir au moins une partie du flux (26) d'eau de refroidissement en provenance de l'unité de traitement (14) et pour produire de l'énergie mécanique, et
- l'organe de contrôle (38) est adapté pour rétroagir sur la turbine (34) pour réguler la première pression à une valeur de consigne.

2. Installation (10) selon la revendication 1, comprenant en outre au moins un alternateur (32) configuré pour convertir l'énergie mécanique produite par la turbine (34) en énergie électrique.

3. Installation (10) selon la revendication 1 ou 2, dans laquelle la turbine (34) est configurée pour délivrer le flux (28) d'eau de refroidissement à la deuxième pression.

4. Installation (10) selon l'une quelconque des revendications 1 à 3, dans laquelle l'unité (24) de régulation de pression comprend en outre au moins une soupape de surpression (36) montée en parallèle de la turbine (34) et adaptée pour recevoir sélectivement au moins une partie du flux (26) d'eau de refroidissement en provenance de l'unité de traitement (14).

5. Installation (10) selon la revendication 4, dans laquelle l'organe de contrôle (38) est adapté rétroagir sur la soupape de surpression (36) pour réguler la première pression à la valeur de consigne.

6. Installation (10) selon l'une quelconque des revendications 1 à 5, dans laquelle l'organe de contrôle (38) est en outre adapté pour mesurer la deuxième pression pour réguler la première pression à la valeur de consigne.

7. Installation (10) selon l'une quelconque des revendications 1 à 6, configurée pour que la première pression soit comprise entre 3 et 6 bars absolus.

8. Installation (10) selon l'une quelconque des revendications 1 à 7, configurée pour que la deuxième pression soit comprise entre 1 et 1,5 bar absolu.

9. Installation (10) selon l'une quelconque des revendications 1 à 8, dans laquelle l'unité (24) de régulation de pression comprend en outre une tuyauterie (40) pour conduire au moins une partie du flux (26) d'eau de refroidissement de l'unité de traitement (14) à la turbine (34), la tuyauterie (40) ayant un diamètre hydraulique compris entre 0,5 et 1 m.

10. Procédé de production pétrolier ou gazier, comprenant les étapes suivantes :
- traitement dans au moins une unité de traitement (14),
- prélèvement d'eau (20) dans une étendue d'eau (12) par au moins une unité (18) de prélèvement d'eau (20), et livraison, par l'unité (18) de prélèvement d'eau (20), d'au moins un flux (22) d'eau de refroidissement à l'unité de traitement (14),
- réception d'un flux (26) d'eau de refroidissement à une première pression en provenance de l'unité de traitement (14) dans une unité (24) de régulation de pression, et fourniture, par l'unité (24) de régulation de pression, d'au moins un flux (28) d'eau de refroidissement à une deuxième pression inférieure à la première pression, l'unité (24) de régulation de pression comprenant au moins une turbine (34) recevant au moins une partie du flux (26) d'eau de refroidissement en provenance de l'unité de traitement (14) et produisant de l'énergie mécanique,
- réception d'au moins une partie du flux (28) d'eau de refroidissement à la deuxième pression dans au moins un système de rejet (30),
- mesure de la première pression par au moins un organe de contrôle (38), et
- rétroaction de l'organe de contrôle (38) sur la turbine (34) pour réguler la première pression à une valeur de consigne.

11. Procédé de rénovation pour obtenir une installation (10) telle que décrite par l'une quelconque des revendications 1 à 9, comprenant le remplacement d'au moins une soupape de surpression (36) présente dans l'unité (24) de régulation de pression avant la rénovation et configurée pour recevoir au moins une partie du flux (26) d'eau de refroidissement en provenance de l'unité de traitement (14), ladite soupape de surpression (36) étant remplacée par la turbine (34).

## Patentansprüche

1. Öl- oder Gaserzeugungsanlage (10), die Folgendes umfasst:
- mindestens eine Verarbeitungseinheit (14),
- mindestens eine Einheit (18) zur Entnahme von Wasser, die dazu angepasst ist, Wasser (20) aus einem Gewässer (12) zu entnehmen und mindestens einen Kühlwasserstrom (22) an die Verarbeitungseinheit (14) abzugeben,
- eine Druckregeleinheit (24), die dazu angepasst ist, einen Kühlwasserstrom (26) mit einem ersten Druck aus der Verarbeitungseinheit (14) aufzunehmen und mindestens einen Kühlwasserstrom (28) mit einem zweiten Druck, der niedriger als der erste Druck ist, bereitzustellen,
- mindestens ein Abfuhrsystem (30), das dazu angepasst ist, mindestens einen Teil des Kühlwasserstroms (28) mit dem zweiten Druck aufzunehmen, und
- mindestens ein Steuerorgan (38), das dazu angepasst ist, den ersten Druck zu messen,
**dadurch gekennzeichnet, dass**:
die Druckregeleinheit (24) mindestens eine Turbine (34) beinhaltet, die dazu konfiguriert ist, mindestens einen Teil des Kühlwasserstroms (26) aus der Verarbeitungseinheit (14) aufzunehmen und mechanische Energie zu erzeugen, und
- das Steuerorgan (38) dazu angepasst ist, auf die Turbine (34) rückzuwirken, um den ersten Druck auf einen Sollwert zu regeln.

2. Anlage (10) nach Anspruch 1, die ferner mindestens einen Wechselstromgenerator (32) beinhaltet, der dazu konfiguriert ist, die durch die Turbine (34) erzeugte mechanische Energie in elektrische Energie umzuwandeln.

3. Anlage (10) nach Anspruch 1 oder 2, wobei die Turbine (34) dazu konfiguriert ist, den Kühlwasserstrom (28) mit dem zweiten Druck abzugeben.

4. Anlage (10) nach einem beliebigen der Ansprüche 1 bis 3, wobei die Druckregeleinheit (24) ferner mindestens ein Überdruckventil (36) beinhaltet, das parallel zu der Turbine (34) montiert ist und dazu angepasst ist, selektiv mindestens einen Teil des Kühlwasserstroms (26) aus der Verarbeitungseinheit (14) aufzunehmen.

5. Anlage (10) nach Anspruch 4, wobei das Steuerorgan (38) dazu angepasst ist, auf das Überdruckventil (36) rückzuwirken, um den ersten Druck auf den Sollwert zu regeln.

6. Anlage (10) nach einem beliebigen der Ansprüche 1 bis 5, wobei das Steuerorgan (38) ferner dazu angepasst ist, den zweiten Druck zu messen, um den ersten Druck auf den Sollwert zu regeln.

7. Anlage (10) nach einem beliebigen der Ansprüche 1 bis 6, die dazu konfiguriert ist, dass der erste Druck zwischen 3 und 6 bar absolut liegt.

8. Anlage (10) nach einem beliebigen der Ansprüche 1 bis 7, die dazu konfiguriert ist, dass der zweite Druck zwischen 1 und 1,5 bar absolut liegt.

9. Anlage (10) nach einem beliebigen der Ansprüche 1 bis 8, wobei die Druckregeleinheit (24) ferner eine Rohrleitung (40) beinhaltet, um mindestens einen Teil des Kühlwasserstroms (26) der Verarbeitungseinheit (14) zu der Turbine (34) zu leiten, wobei die Rohrleitung (40) einen hydraulischen Durchmesser zwischen 0,5 und 1 m aufweist.

10. Öl- oder Gaserzeugungsverfahren, das die folgenden Schritte beinhaltet:
- Verarbeitung in mindestens einer Verarbeitungseinheit (14),
- Entnahme von Wasser (20) aus einem Gewässer (12) durch mindestens eine Einheit (18) zur Entnahme von Wasser (20) und Lieferung, durch die Einheit (18) zur Entnahme von Wasser (20), mindestens eines Kühlwasserstroms (22) an die Verarbeitungseinheit (14),
- Aufnahme eines Kühlwasserstroms (26) mit einem ersten Druck aus der Verarbeitungseinheit (14) in einer Druckregeleinheit (24) und Bereitstellung, durch die Druckregeleinheit (24), mindestens eines Kühlwasserstroms (28) mit einem zweiten Druck, der niedriger als der erste Druck ist, wobei die Druckregeleinheit (24) mindestens eine Turbine (34) beinhaltet, die mindestens einen Teil des Kühlwasserstroms (26) aus der Verarbeitungseinheit (14) aufnimmt und mechanische Energie erzeugt,
- Aufnahme mindestens eines Teils des Kühlwasserstroms (28) mit dem zweiten Druck in mindestens einem Abfuhrsystem (30),
- Messung des ersten Drucks durch mindestens ein Steuerorgan (38) und
- Rückwirkung des Steuerorgans (38) auf die Turbine (34), um den ersten Druck auf einen Sollwert zu regeln.

11. Renovierungsverfahren zur Herstellung einer Anlage (10) wie durch einen beliebigen der Ansprüche 1 bis 9 beschrieben, das die Ersetzung mindestens eines Überdruckventils (36) beinhaltet, das vor der Renovierung in der Druckregeleinheit (24) vorhanden ist und dazu konfiguriert ist, mindestens einen Teil des Kühlwasserstroms (26) aus der Verarbeitungseinheit (14) aufzunehmen, wobei das Überdruckventil (36) durch die Turbine (34) ersetzt wird.

## Claims

1. Oil or gas production facility (10) comprising:
- at least one processing unit (14),
- at least one water uptake unit (18) designed to take up water (20) from an expanse of water (12) and to deliver at least one stream (22) of cooling water to the processing unit (14),
- a pressure regulating unit (24) designed to receive a stream (26) of cooling water at a first pressure coming from the processing unit (14) and to supply at least one stream (28) of cooling water at a second pressure lower than the first pressure,
- at least one discharge system (30) designed to receive at least some of the stream (28) of cooling water at the second pressure, and
- at least one control member (38) designed to measure the first pressure,
**characterized in that**:
- the pressure regulating unit (24) comprises at least one turbine (34) configured to receive at least part of the stream (26) of cooling water coming from the processing unit (14) and to produce mechanical energy, and
- the control member (38) is designed to perform feedback control on the turbine (34) so as to regulate the first pressure to a setpoint value.

2. Facility (10) according to Claim 1, further comprising at least one alternator (32) configured to convert the mechanical energy produced by the turbine (34) into electrical energy.

3. Facility (10) according to Claim 1 or 2, wherein the turbine (34) is configured to deliver the stream (28) of cooling water at the second pressure.

4. Facility (10) according to any one of Claims 1 to 3, wherein the pressure regulating unit (24) further comprises at least one overpressure relief valve (36) mounted in parallel with the turbine (34) and designed to selectively receive at least part of the stream (26) of cooling water coming from the processing unit (14).

5. Facility (10) according to Claim 4, wherein the control member (38) is designed to perform feedback control on the overpressure relief valve (36) so as to regulate the first pressure to the setpoint value.

6. Facility (10) according to any one of Claims 1 to 5, wherein the control member (38) is further designed to measure the second pressure so as to regulate the first pressure to the setpoint value.

7. Facility (10) according to any one of Claims 1 to 6, configured so that the first pressure is comprised between 3 and 6 bar absolute.

8. Facility (10) according to any one of Claims 1 to 7, configured so that the second pressure is comprised between 1 and 1.5 bar absolute.

9. Facility (10) according to any one of Claims 1 to 8, wherein the pressure regulating unit (24) further comprises piping (40) to convey at least part of the stream (26) of cooling water from the processing unit (14) to the turbine (34), the piping (40) having a hydraulic diameter comprised between 0.5 and 1 m.

10. Oil or gas production method comprising the following steps:
- processing in at least one processing unit (14),
- uptake of water (20) from an expanse of water (12) using at least one water (20) uptake unit (18), and delivery, by the water (20) uptake unit (18), of at least one stream (22) of cooling water to the processing unit (14),
- receipt of a stream (26) of cooling water at a first pressure coming from the processing unit (14) in a pressure regulating unit (24), and supply, by the pressure regulating unit (24), of at least one stream (28) of cooling water at a second pressure lower than the first pressure, the pressure regulating unit (24) comprising at least one turbine (34) receiving at least part of the stream (26) of cooling water coming from the processing unit (14) and producing mechanical energy,
- receipt of at least part of the stream (28) of cooling water at the second pressure in at least one discharge system (30),
- measurement of the first pressure by at least one control member (38), and
- feedback control on the turbine (34) by the control member (38) so as to regulate the first pressure to a setpoint value.

11. Renovation method for obtaining a facility (10) as described in any one of Claims 1 to 9, involving replacing at least one overpressure relief valve (36) present in the pressure regulating unit (24) prior to renovation and configured to receive at least part of the stream (26) of cooling water coming from the processing unit (14), said overpressure relief valve (36) being replaced by the turbine (34).
